# EUROPÄISCHE PATENTSCHRIFT

(11) **EP 1 484 528 B1**
(45) Veröffentlichungstag und Bekanntmachung des Hinweises auf die Patenterteilung: **13.09.2006**
(21) Anmeldenummer: 04011884.6
(22) Anmeldetag: 19.05.2004
(51) Int. Cl.: F16F 9/58

(54) **Schwingungsdämpfer für Fahrzeuge**
Vehicle vibration damper
Amortisseur de vibrations pour véhicules

(30) Priorität: 06.06.2003 DE 10325730
(43) Veröffentlichungstag der Anmeldung: 08.12.2004
(73) Patentinhaber: ZF Sachs AG, 53783 Eitorf (DE)
(72) Erfinder: Brehm, Stefan, 53773 Hennef (DE); Heinisch, Manfred, 53783 Eitorf (DE); Müller, Michael, 53773 Hennef (DE)

(56) Entgegenhaltungen:
- EP-A- 0 864 774
- DE-U- 1 816 598
- PATENT ABSTRACTS OF JAPAN Bd. 1995, Nr. 05, 30. Juni 1995 (1995-06-30) -& JP 07 035187 A (SUZUKI MOTOR CORP), 3. Februar 1995 (1995-02-03)
- PATENT ABSTRACTS OF JAPAN Bd. 2002, Nr. 06, 4. Juni 2002 (2002-06-04) -& JP 2002 039252 A (SHOWA CORP), 6. Februar 2002 (2002-02-06)

## Beschreibung

Die Erfindung bezieht sich auf einen Schwingungsdämpfer für Fahrzeuge, bestehend aus einem Arbeitszylinder, in dem ein Kolben über eine Kolbenstange axial geführt ist, wobei der Kolben den Arbeitszylinder in zwei mit Dämpfungsflüssigkeit gefüllte Arbeitsräume unterteilt, wobei zwischen dem Kolben und einer Kolbenstangenführung ein Zuganschlag vorgesehen ist, und dass zwischen einem mit der Kolbenstange befestigten Auflager und der Kolbenstangenführung ein gekammertes Zuganschlagelement angeordnet ist.

Es sind bereits Schwingungsdämpfer bekannt (DE-GM 85 20 989), bei denen ein Auflagering an der Kolbenstange angeordnet ist, der als Anlagefläche für einen elastischen Anschlagring dient. Dieser Anschlagring kommt ab einem bestimmten Ausfahrweg der Kolbenstange an der Zylinder inneren Stirnfläche der Kolbenstangenführung zur Anlage, so dass ein Zuganschlag gebildet ist. Nachteilig ist hierbei, dass der elastische Anschlagring nicht nur in axialer Richtung, sondern auch in radialer Richtung bei axialer Druckbeaufschlagung verformt wird. Hierbei kann es auftreten, dass der elastische Anschlagring über die zulässigen Schubspannungen hinaus verformt und damit zerstört wird.

Darüber hinaus sind weitere Zuganschlagvorrichtungen bekannt (EP 119 197 B1, EP 120.005 B1), bei denen ebenfalls als Zuganschlag ein elastischer Ring verwendet wird, der über winkelförmige Halterungen derart an der Kolbenstange angebracht ist, dass bei einer axialen Druckbeaufschlagung nicht nur eine axiale sondern auch eine radiale Verformung des elastischen Ringes auftritt.

Die Anschlagvorrichtung gemäß EP 0.864.774 A1 besteht aus einem Anschlagteil, welches über einen Sprengring im Arbeitszylinder eine maximale Endposition einnimmt und mit einer Ringnut zur Aufnahme des elastischen Ringes versehen ist. Der elastische Ring ist dabei auf der entgegengesetzten Seite von einem weiteren Anschlagteil begrenzt.

Hiervon ausgehend ist es Aufgabe der Erfindung, bei einem Schwingungsdämpfer für Fahrzeuge einen einfachen und kostengünstigen Zuganschlag zu schaffen, der unabhängig der auftretenden Belastungen eine ausreichende Dauerhaltbarkeit aufweist.

Zur Lösung dieser Aufgabe ist erfindungsgemäß vorgesehen, dass das Zuganschlagelement aus einem elastischen, aus einem Elastomerwerkstoff hergestellten Element besteht, welches mit einem Armierungsteil umgeben ist und das elastische Teil und das Armierungsteil fest miteinander verbunden sind, wobei das elastische Element auf mindestens einer Stirnseite mit mindestens einer Erhebung versehen ist, dabei wird die Blocklänge des elastischen Elementes durch die Höhe des Armierungsteiles definiert.

Hierbei ist von Vorteil, dass durch eine entsprechende Kammerung des Zuganschlagelementes axiale Kräfte aufgefangen werden können, ohne dass dabei eine radiale Auslenkung des Zuganschlagelementes auftritt.

Nach einem wesentlichen Merkmal ist vorgesehen, dass das Zuganschlagelement aus einem elastischen Element besteht, welches mit einem Armierungsteil umgeben ist. Vorteilhaft ist dabei, dass die Höhe des Armierungsteiles die Blocklänge des elastischen Elementes definiert. Dadurch lassen sich auch bei steigender Belastung eine begrenzte Verformung erzielen, so dass die zulässigen Schubspannungen nicht überschritten werden.

Darüber hinaus ist vorgesehen, dass das elastische Teil mit dem Armierungsteil durch Vulkanisation verbunden ist. Hierbei ist von Vorteil, dass es möglich ist, Gummimischungen derart auszuwählen, dass die Anschlaggeräusche minimiert werden.

Eine weitere Ausführungsform sieht vor, dass das Zuganschlagelement auf der Kolbenstange geführt und axial beweglich angeordnet ist.

In weiterer Ausgestaltung ist vorgesehen, dass das Zuganschlagelement auf mindestens einer Stirnseite mit mindestens mehreren Erhebungen versehen ist, die über den Umfang der Stirnseite verteilt angeordnet sind. Durch die Gestaltung der entsprechenden Erhebungen lassen sich auftretende Anschlaggeräusche als auch die auszuführende Blocklänge des Zuganschlagelementes positiv beeinflussen.

Nach einem weiteren Merkmal ist vorgesehen, dass der Endbereich der Feder mit einem Abstützelement zur Abstützung am Zuganschlagelement versehen ist.

Bevorzugte Ausführungsbeispiele der Erfindung sind in den Zeichnungen schematisch dargestellt.

Es zeigt:
Figur 1 einen Schwingungsdämpfer im Schnitt
Figur 2 ein Zuganschlagelement als Einzelheit
Figur 3 und 4 ein elastisches Element zusammen mit dem Armierungsteil in Draufsicht und Schnitt.

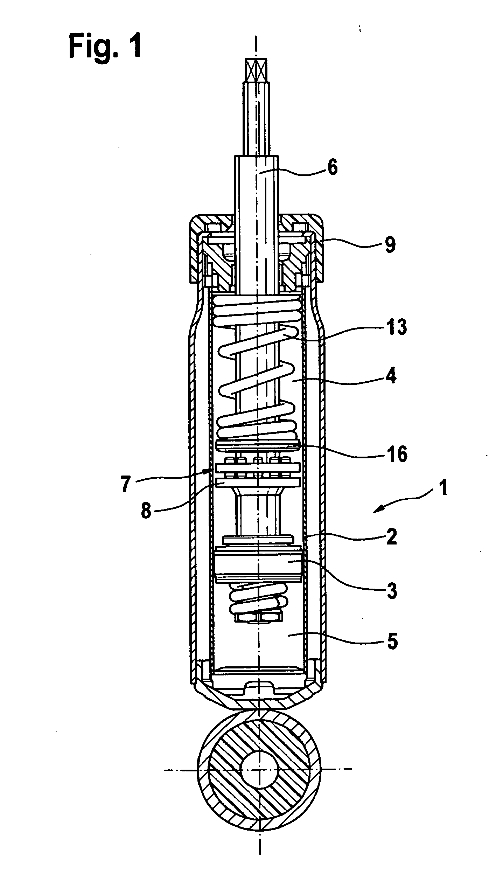

Der in Figur 1 dargestellte Schwingungsdämpfer 1 besteht im wesentlichen aus dem Arbeitszylinder 2, dem an der Kolbenstange 6 axial beweglich geführten Kolben 3, dabei unterteilt der Kolben 3 den Arbeitszylinder 2 in den oberen Arbeitsraum 4 und den unteren Arbeitsraum 5. Im Dämpfungskolben 3 sind üblicherweise Dämpfungsventile (nicht dargestellt) für die jeweilige Strömungsrichtung vorgesehen.

Die Kolbenstange 6 wird durch die Kolbenstangenführung 9 nach außen herausgeführt, wobei zwischen der Kolbenstangenführung 9 und dem Kolben 3 ein Zuganschlagelement 7 vorgesehen ist. Das Zuganschlagelement 7 wird auf der dem Kolben 3 zugewandten Seite vom Auflager 8 abgestützt und ist in Richtung der. Kolbenstangenführung 9 zumindest teilweise axial beweglich auf der Kolbenstange 6 geführt.

Des weiteren ist die Feder 13 sowie das Abstützelement 16 in Wirkverbindung mit dem Zuganschlagelement 7 ausgebildet.

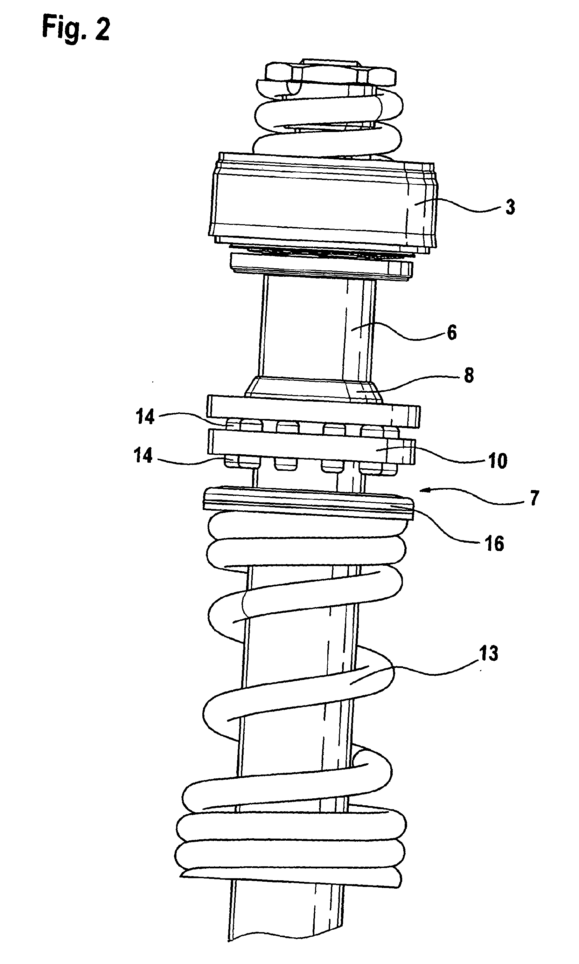

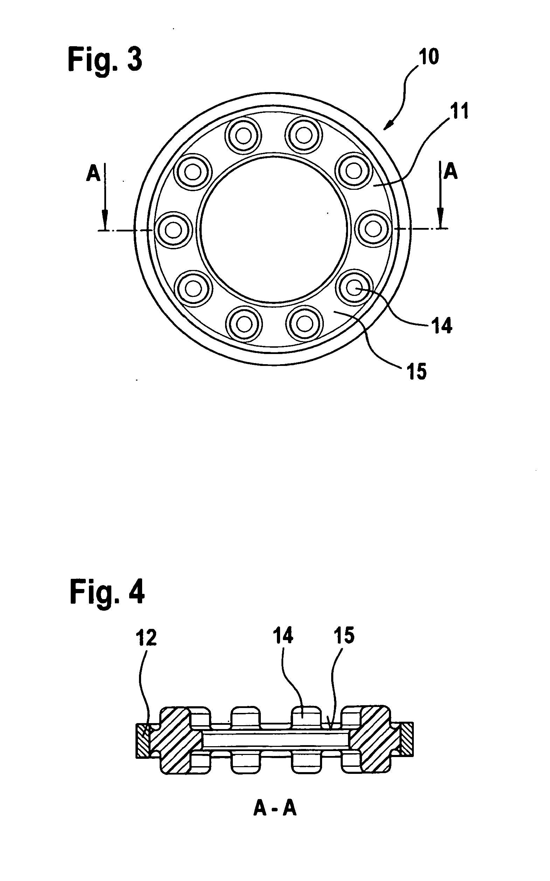

Aus der Figur 2 ist als Einzelheit eine Kolbenstange 6 mit dem daran fixierten Kolben 3 dargestellt, wobei zwischen dem Auflager 8 und dem Abstützelement 16 der Feder 13 das Zuganschlagelement 7 angeordnet ist. In diesem Ausführungsbeispiel ist das Zuganschlagelement 10 zu beiden Seiten der jeweiligen Stirnseite 15 mit Erhebungen 14 versehen. Diese Erhebungen 14 gehören zu dem elastischen Element 11, welches in den Figuren 3 und 4 als Einzelheit dargestellt ist.

Aus den Figuren 3 und 4 ist das Zuganschlagelement 10 als Einzelteil dargestellt, wobei das Armierungsteil 12 das elastische Element 11 nach radial außen begrenzt. Das elastische Element 11 sowie das Armierungsteil 12 sind dabei einteilig ausgebildet, sie können durch Vulkanisation miteinander verbunden werden. Auf der jeweiligen Stirnseite 15 des elastischen Elementes 11 sind Erhebungen 14 über den Umfang verteilt angeordnet, die der Abstützung gegenüber dem Auflager 8 sowie dem Abstützelement 16 des Schwingungsdämpfers 1 dienen.

### Bezugszeichenliste

- 1 -: Schwingungsdämpfer
- 2 -: Arbeitszylinder
- 3 -: Kolben
- 4 -: oberer Arbeitsraum
- 5 -: unterer Arbeitsraum
- 6 -: Kolbenstange
- 7 -: Zuganschlagelement
- 8 -: Auflager
- 9 -: Kolbenstangenführung
- 10 -: Zuganschlagelement
- 11 -: elastisches Element
- 12 -: Armierungsteil
- 13 -: Feder
- 14 -: Erhebung
- 15 -: Stirnseite
- 16 -: Abstützelement

## Patentansprüche

1. Schwingungsdämpfer für Fahrzeuge, bestehend aus einem Arbeitszylinder, in dem ein Kolben über eine Kolbenstange axial geführt ist, wobei der Kolben den Arbeitszylinder in zwei mit Dämpfungsflüssigkeit gefüllte Arbeitsräume unterteilt, wobei zwischen dem Kolben und einer Kolbenstangenführung ein Zuganschlag vorgesehen ist, und zwischen einem mit der Kolbenstange befestigten Auflager und der Kolbenstangenführung ein gekammertes Zuganschlagelement angeordnet ist,
**dadurch gekennzeichnet,**
**dass** das Zuganschlagelement (10) aus einem elastischen, aus einem Elastomerwerkstoff hergestellten Element (11) besteht, welches mit einem Armierungsteil (12) umgeben ist und das elastische Teil (11) und das Armierungsteil (12) fest miteinander verbunden sind, wobei das elastische Element (11) auf mindestens einer Stirnseite (15) mit mindestens einer Erhebung (14) versehen ist, dabei wird die Blocklänge des elastischen Elementes (11) durch die Höhe des Armierungsteiles (12) definiert.

2. Schwingungsdämpfer nach Anspruch 1,
**dadurch gekennzeichnet,**
**dass** das elastische Teil (11) mit dem Armierungsteil (12) durch Vulkanisation verbunden ist.

3. Schwingungsdämpfer nach Anspruch 1,
**dadurch gekennzeichnet,**
**dass** zwischen dem Zuganschlagelement (10) und der Kolbenstangenführung (9) eine Feder (13) angeordnet ist.

4. Schwingungsdämpfer nach Anspruch 1,
**dadurch gekennzeichnet,**
**dass** das Zuganschlagelement (10) auf der Kolbenstange (6) geführt und axial beweglich angeordnet ist.

5. Schwingungsdämpfer nach Anspruch 1,
**dadurch gekennzeichnet,**
**dass** mehrere Erhebungen (14) vorgesehen sind, die über den Umfang der Stirnseite (15) verteilt angeordnet sind.

6. Schwingungsdämpfer nach Anspruch 1,
**dadurch gekennzeichnet,**
**dass** der Endbereich der Feder (13) mit einem Abstützelement (16) zur Abstützung am Zuganschlagelement (10) versehen ist.

## Claims

1. Vibration damper for vehicles, comprising an operating cylinder, in which a piston is guided axially via a piston rod, the piston dividing the operating cylinder into two operating spaces which are filled with damping fluid, a tension stop being provided between the piston and a piston-rod guide, and an enclosed tension-stop element being arranged between a support which is fastened to the piston rod and the piston-rod guide, **characterized in that** the tension-stop element (10) comprises an elastic element (11) which is manufactured from an elastomer material and is surrounded by a reinforcement part (12), and the elastic part (11) and the reinforcement part (12) are connected fixedly to one another, the elastic element (11) being provided on at least one end side (15) with at least one elevation (14), the block length of the elastic element (11) being defined here by the height of the reinforcement part (12).

2. Vibration damper according to Claim 1, **characterized in that** the elastic part (11) is connected to the reinforcement part (12) by vulcanization.

3. Vibration damper according to Claim 1, **characterized in that** a spring (13) is arranged between the tension-stop element (10) and the piston-rod guide (9).

4. Vibration damper according to Claim 1, **characterized in that** the tension-stop element (10) is guided on the piston rod (6) and is arranged so as to be movable axially.

5. Vibration damper according to Claim 1, **characterized in that** a plurality of elevations (14) are provided which are distributed over the circumference of the end side (15).

6. Vibration damper according to Claim 1, **characterized in that** the end region of the spring (13) is provided with a supporting element (16) for support on the tension-stop element (10).

## Revendications

1. Amortisseur de vibrations pour véhicules, composé d'un cylindre de travail dans lequel un piston est guidé par une bielle, le piston divisant le cylindre de travail en deux espaces de travail remplis de fluide d'amortissement, une butée de traction étant prévue entre le piston et un guide de bielle et un élément de butée de traction à chambre étant disposé entre un appui fixé à la bielle et le guide de bielle, **caractérisé en ce que** l'élément de butée de traction (10) se compose d'un élément (11) élastique, fabriqué dans un matériau élastomère, lequel est entouré d'une partie armature (12) et la partie élastique (11) ainsi que la partie armature (12) sont fixées à demeure l'une à l'autre, l'élément élastique (11) étant muni sur au moins un côté frontal (15) d'au moins un bossage (14), la longueur de bloc de l'élément élastique (11) étant ici définie par la hauteur de la partie armature (12).

2. Amortisseur de vibrations selon la revendication 1, **caractérisé en ce que** la partie élastique (11) est reliée à la partie armature (12) par vulcanisation.

3. Amortisseur de vibrations selon la revendication 1, **caractérisé en ce qu'**un ressort (13) est disposé entre l'élément de butée de traction (10) et le guide de bielle (9).

4. Amortisseur de vibrations selon la revendication 1, **caractérisé en ce que** l'élément de butée de traction (10) est disposé de manière à être guidé sur la bielle (6) et mobile dans le sens axial.

5. Amortisseur de vibrations selon la revendication 1, **caractérisé en ce que** plusieurs bossages (14) sont prévus, lesquels sont répartis sur le pourtour du côté frontal (15).

6. Amortisseur de vibrations selon la revendication 1, **caractérisé en ce que** la zone d'extrémité du ressort (13) est munie d'un élément d'appui (16) destiné à venir s'appuyer sur l'élément de butée de traction (10).
